# EUROPÄISCHE PATENTSCHRIFT

(11) **EP 2 581 297 B1**
(45) Veröffentlichungstag und Bekanntmachung des Hinweises auf die Patenterteilung: **10.08.2016**
(21) Anmeldenummer: 12186754.3
(22) Anmeldetag: 01.10.2012
(51) Int. Cl.: B62J 99/00

(54) **Fahrradcomputer**
Bicycle computer
Ordinateur de vélo

(30) Priorität: 10.10.2011 DE 102011115553
(43) Veröffentlichungstag der Anmeldung: 17.04.2013
(73) Patentinhaber: Ciclosport K.W. Hochschorner GmbH, 82166 Gräfelfing (DE)
(72) Erfinder: Hochschorner, Walther, 82152 Martinsried (DE)
(74) Vertreter: Heim, Florian Andreas

(56) Entgegenhaltungen:
- DE-A1-102007 034 311
- DE-U1-202006 008 279
- US-A1- 2009 192 673

## Beschreibung

Die Erfindung betrifft einen Fahrradcomputer zur Ermittlung von Daten bei der Verwendung eines Fahrrades. Derartige Fahrradcomputer weisen eine Schnittstelle zu zumindest einem Sensor, welcher Daten zur Verwendung des Fahrrades ermittelt, und mindestens eine Steuer- und Auswerteeinheit zum Verarbeiten zumindest eines Teils der über die Schnittstelle erhaltenen Daten und zum Speichern in einem internen Datenspeicher auf. Ferner ist eine Computerschnittstelle zur Kommunikation mit einem Computer vorgesehen, wobei die Schnittstelle als standarkonforme Schnittstelle ausgeführt ist.

Fahrradcomputer werden zum Ermitteln und Anzeigen von Daten beim Fahrradfahren verwendet. So ist es beispielsweise möglich, mittels eines bekannten Reifendurchmessers und eines Sensors, der die Umdrehungen des Rades detektiert, die gefahrene Strecke und hieraus mit einem Zeitmesser die Geschwindigkeit zu ermitteln. Diese kann dann auf einem Display des Fahrradcomputers angezeigt werden. Neben diesen klassischen Funktionen eines Fahrradcomputers weisen neuere Modelle zum Teil Höhenmesser auf, um beispielsweise bei Mountainbiketouren die aktuelle Höhe anzuzeigen. Auch sind Produkte bekannt, die ein eingebautes GPS aufweisen und so die aktuelle Position anzeigen können.

Derartige Fahrradcomputer wurden dahingehend erweitert, dass ein interner Datenspeicher vorgesehen wurde, in dem beispielsweise die ermittelte Geschwindigkeit abgespeichert wird. Es ist auch möglich, die ermittelte Höhe über einen Zeitraum abzuspeichern und so das gefahrene Höhenprofil in dem internen Datenspeicher zur Verfügung zu stellen. In ähnlicher Weise kann über die ermittelten Koordinaten des GPS-Systerns eine gefahrene Fahrstrecke aufgezeichnet werden.

Um diese in dem internen Datenspeicher abgespeicherten Daten nicht nur auf dem Fahrradcomputer selbst zur Verfügung zu stellen, sondern die Daten beispielsweise auf einen Computer zu einer ausführlichen Auswertung und/oder Archivierung zu laden, ist oft eine Computerschnittstelle vorgesehen. Über eine Computerschnittstelle an dem Fahrradcomputer und ein entsprechendes Kabel kann ein Computer mit dem Fahrradcomputer verbunden werden. Zur Vereinfachung wird oft eine standardkonforme Schnittstelle zwischen Fahrradcomputer und Computer verwendet. Nun sollen die auf dem Fahrradcomputer gespeicherten Daten über die Computerschnittstelle vom Computer ausgelesen werden, um beispielsweise die ermittelte Wegstrecke auf einem Google Earth Overlay anzeigen zu können.

Da die Daten auf dem Fahrradcomputer meist in einem speziell für den Fahrradcomputer entwickelten Format und in oft nur für den Fahrradcomputer zugänglicher Form vorliegen, ist es nicht möglich, die Daten direkt vom Fahrradcomputer auszulesen. Deswegen wird meist eine zusätzliche Software zur Verfügung gestellt, die auf dem Computer installiert werden muss, damit dieser auf die Daten des Fahrradcomputers zugreifen kann beziehungsweise die Daten auslesen kann.

Allerdings ist die zusätzliche Notwendigkeit der Installation von Software auf dem Computer, bevor dieser die Daten des Fahrradcomputers erhalten kann, aufwändig und in manchen Bereichen nicht möglich. Der Benutzer muss die entsprechenden Rechte auf dem Computer beziehungsweise Rechner besitzen, um das Programm zu installieren. Außerdem sind Situationen denkbar, in denen es beispielsweise, wenn in einem Internetcafe auf die Daten des Fahrradcomputers zugegriffen werden soll, nicht möglich ist, Programme zu installieren. Außerdem müsste das zum Auslesen benötigte Programm dann immer vom Benutzer mitgeführt werden.

Die DE 10 2007 034 311 A1 beschreibt, als Oberbegriff vom Anspruch 1, einen Fahrradcomputer, der einen Flash-Speicher aufweist, welcher mittels eines integrierten USB-Anschlusses auslesbar ist.

Der Erfindung liegt die **Aufgabe** zugrunde, den Zugriff auf Daten eines Fahrradcomputers über einen Computer zu vereinfachen.

Die Aufgabe wird erfindungsgemäß durch einen Fahrradcomputer mit den Merkmalen des Anspruchs 1 gelöst.

Weitere vorteilhafte Ausführungsformen sind in den abhängigen Ansprüchen, der Beschreibung sowie den Figuren und deren Beschreibung angegeben.

Gemäß dem Anspruch 1 weist der erfindungsgemäße Fahrradcomputer einen öffentlichen Massenspeicher auf, auf welchen über die standardkonforme Schnittstelle mittels eines Standardmassenspeicherprotokolls von einem Computer zugegriffen werden kann. Ferner ist vorgesehen, dass in dem öffentlichen Massenspeicher eine von einem über die standardkonforme Schnittstelle angeschlossenen Computer interpretierte Datei vorgesehen ist. Zusätzlich ist ein Kommunikationsspeicher in dem Fahrradcomputer angeordnet. Mittels der interpretierbaren Datei ist der Kommunikationsspeicher beschreib- und lesbar, wobei durch in den Kommunikationsspeicher geschriebene Daten die Steuer- und Auswerteeinrichtung veranlasst wird, Daten aus dem internen Datenspeicher in den Kommunikationsspeicher zu schreiben.

Ein Grundgedanke der Erfindung kann darin gesehen werden, auf spezielle Programme, die auf einem Computer installiert werden müssen, um den Fahrradcomputer auszulesen beziehungsweise seine Daten zu lesen, zu verzichten. Hierzu ist es vorgesehen, dass der Fahrradcomputer einen öffentlichen Massenspeicher aufweist, der über eine standardkonforme Schnittstelle mit einem standardkonformen Massenspeicherprotokoll auslesbar und beschreibbar ist. Durch die Verwendung von Standardkomponenten soll erreicht werden, dass es nicht notwendig ist, spezielle Software auf dem Computer, der zur Kommunikation mit dem Fahrradcomputer vorgesehen ist, installieren zu müssen.

In dem öffentlichen Massenspeicher ist eine interpretierbare Datei vorgesehen. Diese kann von dem Computer gelesen und interpretiert werden. Hierbei kann es sich beispielsweise um ein ausführbares Programm handeln. Nach dem Ausführen des Programmes der interpretierbaren Datei oder dem Interpretieren der Datei ist es möglich, mittels dieser Datei beziehungsweise ihrer Informationen auf den Kommunikationsspeicher zuzugreifen. Dieser ist systemgemäß nicht über das Standardmassenspeicherprotokoll sichtbar, beziehungsweise es ist nicht möglich, auf ihn zuzugreifen.

Mithilfe der interpretierbaren Datei können Daten in den Kommunikationsspeicher geschrieben werden. Diese Daten können auch als Befehle an die Steuer- und Auswerteeinrichtung angesehen werden. Sofern die Daten beziehungsweise Befehle in den Kommunikationsspeicher geschrieben sind, werden sie von der Steuer- und Auswerteeinrichtung ausgewertet. So ist es beispielsweise möglich, die Steuer- und Auswerteeinrichtung anzuweisen, das Höhenprofil der letzten Radtour zur Verfügung zu stellen. Dies funktioniert derart, dass die Steuer- und Auswerteeinrichtung die entsprechenden Daten aus dem internen Datenspeicher ausliest, wenn notwendig verarbeitet und in einer mittels der interpretierbaren Datei lesbaren Form in den Kommunikationsspeicher schreibt. Anschließend kann der Computer mithilfe der interpretierbaren Datei die Daten aus dem Kommunikationsspeicher auslesen und für den Benutzer anzeigen beziehungsweise zugänglich machen.

Hierbei kann die interpretierbare Datei auch eine größere Anzahl von Dateien beinhalten, die miteinander zusammenwirken. Ebenfalls ist es theoretisch möglich, auf den Kommunikationsspeicher zu verzichten und ihn als Teil des öffentlichen Massenspeichers anzusehen. In diesem Fall ist aber dennoch die interpretierbare Datei notwendig, da der Computer, der dann zwar direkt auf den öffentlichen Massenspeicher schreiben kann, nicht die notwendigen Befehle kennt, um die Steuer- und Auswerteeinrichtung zu veranlassen, die notwendigen Daten zur Verfügung zu stellen.

In einer Weiterbildung der Erfindung ist die standardkonforme Schnittstelle als USB-Schnittstelle ausgebildet und das Standardmassenspeicherprotokoll ein USB-Massenspeicherprotokoll. Das USB-Massenspeicherprotokoll ist auf allen aktuell verbreiteten Computersystemen standardmäßig vorhanden. Somit kann in einfacher Weise erreicht werden, dass es für einen an den Fahrradcomputer über die vorhandene USB-Schnittstelle angeschlossenen Computer möglich ist, auf den öffentlichen Massenspeicher zuzugreifen. Hierdurch wird auch vermieden, dass eine spezielle Software für den Zugriff auf den öffentlichen Massenspeicher zur Verfügung gestellt werden muss. Dies vereinfacht die Verwendung für den Benutzer, da dieser keine spezielle Software mehr installieren muss.

Vorteilhaft ist es, wenn die interpretierbare Datei als html-Datei insbesondere mit vorgesehenem Javascript realisiert ist. Eine html-Datei kann mittels Webbrowsern, die standardmäßig auf gängigen Computern mit den gängigen Betriebssystemen installiert sind, angezeigt werden. In ähnlicher Weise verhält es sich mit der Ausführbarkeit von Javascript. Somit stellt die interpretierbare Datei einen statischen Rahmen zur Verfügung, der in dem Browser des Computers angezeigt werden kann. Über die in der html-Datei vorgesehene Javascript-Funktionalität kann die Kommunikation mit dem Kommunikationsspeicher realisiert werden. So ist es beispielsweise möglich, in der dargestellten Webpage einen Button vorzusehen, der das Ausführen eines entsprechenden Javascripts veranlasst, das einen Befehl in den Kommunikationsspeicher schreibt, das Höhenprofil der letzten Tour in den Kommunikationsspeicher zu schreiben. Sobald über die Steuer- und Auswerteeinrichtung die entsprechenden Daten in den Kommunikationsspeicher geschrieben sind, wird dieser wiederum mittels des Javascriptes ausgelesen und die ausgelesenen Daten im Rahmen einer dynamischen Webpage dem Benutzer grafisch zur Verfügung gestellt.

Eine besonders einfache Bedienung, die auch sehr komfortabel ist, kann dadurch erreicht werden, dass eine Autostartfunktion für die interpretierbare Datei vorhanden ist, die beim Anschluss des Fahrradcomputers an den Computer über die standardkonforme Schnittstelle ein automatisches Ausführen beziehungsweise Interpretieren der Datei veranlasst. Dies hat zur Folge, dass, wenn der Fahrradcomputer per USB mit dem Computer verbunden wird, automatisch der Browser des Computers geöffnet wird, und die entsprechende html-Datei angezeigt wird. Hierdurch wird es gerade für weniger versierte Benutzer vereinfacht, die notwendigen Schritte zur Kommunikation mit dem Fahrradcomputer zu initialisieren.

Grundsätzlich ist es möglich, den öffentlichen Speicher, den internen Datenspeicher und/oder den Kommunikationsspeicher jeweils als physikalisch unterschiedliche Speicher, beispielsweise einzelnen Flashbausteinen, vorzusehen. Der Aufbau wird jedoch vereinfacht, wenn der öffentliche Speicher, der interne Datenspeicher und/oder der Kommunikationsspeicher in einem physikalischen Speicher, beispielsweise einem Flashbaustein, vorgesehen sind. Die unterschiedlichen Speicher können dann jeweils durch unterschiedliche Zugriffs-, Lese- und/oder Schreibbereiche in dem einen physikalischen Speicher definiert werden. Dies erspart insbesondere Volumen in dem Fahrradcomputer und kann auch die Kosten im Vergleich zu drei separaten Speicherbausteinen verringern.

Neben dem Auslesen von Daten mittels der interpretierbaren Datei kann es auch vorgesehen sein, mittels der interpretierbaren Datei eine Konfiguration des Fahrradcomputers zu ermöglichen. Hierbei werden mittels der interpretierbaren Datei Konfigurationsdaten in den Kommunikationsspeicher zur Auswertung und/oder Bearbeitung durch die Steuer- und Auswerteeinrichtung geschrieben. Dies kann beispielsweise in der Art realisiert sein, dass auf dem Webbrowser ein ausfüllbares Feld ist, in dem beispielsweise der Reifenumfang des Fahrrades eingegeben werden kann. Nach dem Betätigen einer entsprechenden Schaltfläche wird über die Javascript-Funktion diese Information in den Kommunikationsspeicher des Fahrradcomputers mit einer entsprechenden Anweisung geschrieben, den eingegebenen Reifenumfang im Fahrradcomputer zu speichern und zur weiteren Auswertung zu verwenden. Hierdurch kann ein kompliziertes Eingabeverfahren mit den wenigen direkt auf dem Fahrradcomputer vorhandenen Tasten vereinfacht werden.

Damit die Steuer- und Auswerteeinrichtung auch Befehle, welche in den Kommunikationsspeicher geschrieben werden, wahrnimmt und ausführt, kann ein zyklisches Auslesen des Kommunikationsspeichers durch die Steuer- und Auswerteeinrichtung vorgesehen sein. In ähnlicher Weise ist es möglich, dass ein spezieller Auslesebefehl an die Steuer- und Auswerteeinrichtung sendbar ist, der sie veranlasst, den Kommunikationsspeicher auszulesen. In jedem Fall wird das Ergebnis erreicht, dass neue Befehle, welche in dem Kommunikationsspeicher vorhanden sind, durch die Steuer- und Auswerteeinrichtung erkannt und befolgt werden.

Grundsätzlich ist es möglich, die gesamte Kommunikation zwischen dem Fahrradcomputer und einem Computer über die zuvor beschriebene USB-Schnittstelle mit dem Massenspeicherprotokoll zu realisieren. Vorteilhaft ist es jedoch, wenn eine zusätzlich HMI-Schnittstelle über die standardkonforme Schnittstelle vorgesehen ist, welche mittels einer speziellen Software zum direkten Zugriff auf den internen Speicher ausgelegt ist. Diese spezielle Software erfordert dann eine Installation auf dem Computer, wie es auch herkömmlicherweise notwendig ist. Beispielsweise ist es denkbar, dass diese spezielle Software nur an Zwischenhändler, nicht aber an die Endkunden verteilt wird. Somit ist es für die Zwischenhändler möglich, auf zusätzliche Informationen direkt im internen Speicher zuzugreifen, die dem Endverbraucher nicht zugänglich sind. Hier kann es sich beispielsweise um Garantie- oder Herstellungsinformationen handeln.

In einer weiteren Ausführungsform kann es durch die interpretierbare Datei ermöglicht werden, Daten des internen Datenspeichers in roher und/oder aufbereiteter Form an Dienste im Internet zu übertragen. Beispielsweise ist es vorstellbar, dass der Hersteller des erfindungsgemäßen Fahrradcomputers eine Community-Website betreibt, auf die Endverbraucher Daten zu ihren Fahrradtouren hochladen können. In diesem Zusammenhang ist es beispielsweise möglich, über die html-Datei mit integriertem Javascript direkt einen Zugriff auf die Internetdienste anzubieten. Dies erleichtert den Zugriff für den Endbenutzer. Außerdem ist der Vorteil gegeben, dass keine oder nur wenige Installations- und Rechtekonflikte auf dem eigentlichen Computer auftreten können.

In der vorliegenden Beschreibung wird der Fahrradcomputer als Einrichtung zum Übermitteln von Daten bei der Verwendung eines Fahrrades beschrieben. In diesem Zusammenhang können unter Fahrrad auch die mittlerweile immer populärer werdenden E-Fahrräder verstanden werden, welche einen elektrischen Zusatzantrieb aufweisen, der unterstützend auf die vom Fahrer aufgewendete Kraft einwirkt. In diesem Zusammenhang bieten sich auch größere Auswertespielräume für ermittelte Daten an, beispielsweise kann der Verlauf der Unterstützung im internen Datenspeicher des Fahrradcomputers abgelegt werden.

Die Erfindung wird nachfolgend anhand eines Ausführungsbeispieles und einer schematischen Zeichnung näher erläutert. Diese Zeichnung zeigt:

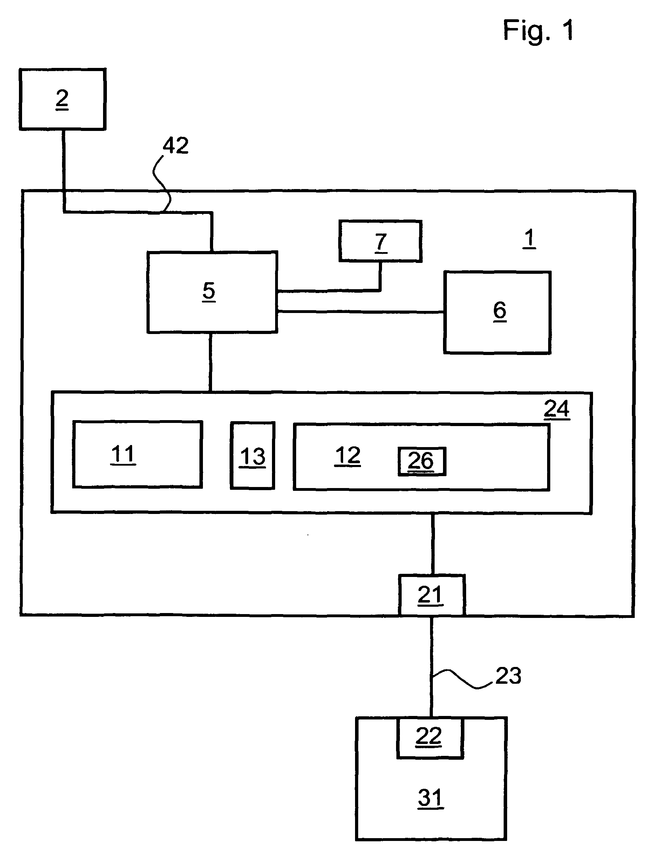

- Fig. 1: einen Aufbau eines erfindungsgemäßen Fahrradcomputers, welcher mit einem Computer verbunden ist.

In der Fig. 1 ist ein stark vereinfachter Fahrradcomputer 1 dargestellt. Der Fahrradcomputer 1 weist als zentrale Einheit eine Steuer- und Auswerteeinrichtung 5 auf. Diese kann beispielsweise durch einen entsprechend ausgelegten Mikroprozessor realisiert werden. Ferner ist in dem Fahrradcomputer 1 ein Speicherbaustein 24 vorgesehen, in dem einzelne Speicherbereiche 11, 12, 13 definiert sind. Diese Speicherbereiche 11, 12, 13 sind ein interner Datenspeicher 11, ein öffentlicher Massenspeicher 12 und ein Kommunikationsspeicher 13. Die Definition der verschiedenen Speicherbereiche 11, 12, 13 kann beispielsweise über entsprechende Lese- und Schreibrechte erfolgen.

So kann der interne Datenspeicher 11 dadurch definiert werden, dass er nur von der Steuer- und Auswerteeinrichtung 5 les- und beschreibbar ist. Der öffentliche Massenspeicher 12 kann beispielsweise dadurch definiert werden, dass er als einziger Speicher über eine am Fahrradcomputer 1 vorgesehene USB-Schnittstelle 21 les- und beschreibbar ist. Hierbei kann im Rahmen der Erfindung unter USB-Schnittstelle sowohl die physikalische Auslegung wie auch die logische technische Auslegung des Datenprotokolls für USB-Massenspeicher verstanden werden.

Ferner ist in Fig. 1 exemplarisch ein Sensor 2 dargestellt, bei dem es sich beispielsweise um einen einfachen Magnetsensor handeln kann. Dieser kann ein Impulssignal über eine Leitung 42 an die Steuer- und Auswerteeinrichtung 5 bei jeder Umdrehung des Rades eines Fahrrades senden.

Anhand eines bekannten Reifenumfangs kann so die Steuer- und Auswerteeinrichtung 5 eine zurückgelegte Strecke ermitteln, die zusammen mit einem internen Timer in eine aktuelle Geschwindigkeit umgerechnet werden kann. Diese kann während des Betriebes des Fahrradcomputers 1 beispielsweise auf einem Display 6 ausgegeben werden. Es ist aber alternativ oder zusätzlich möglich, die aktuelle Geschwindigkeit zu einem bestimmten Zeitpunkt mittels der Steuer- und Auswerteeinrichtung 5 in dem internen Speicher 11 abzuspeichem.

In dem internen Speicher 11 können auch weitere Daten, welche mithilfe von Sensoren, die hier nicht gezeigt sind, ermittelt wurden, mit der Steuer- und Auswerteeinrichtung 5 abgespeichert werden. Hierbei kann es sich beispielsweise um die mit einem Höhenmesser 7 ermittelte Höhe handeln.

Um die Daten des erfindungsgemäßen Fahrradcomputers 1 an einen Computer 31 auslesen zu können, ist die USB-Schnittstelle 21 vorgesehen. Mit dieser kann der Fahrradcomputers 1 mit dem Computer 31, der ebenfalls eine USB-Schnittstelle 22 aufweist, und einem USB-Kabel 23 verbunden werden. Der öffentliche Speicher 12 kann hierbei von dem Computer 31, der auch als Rechner bezeichnet werden kann, über das auf den meisten Computern vorhandene USB-Massenspeicherprotokoll ausgelesen und beschrieben werden. Im Massenspeicher 12 befindet sich eine interpretierbare Datei 26, bei der es sich beispielsweise um eine html-Datei mit Javascript-Erweiterung handeln kann. Es kann sich jedoch auch um ein XML-Format oder ein anderes Dateiformat handeln, welches standardmäßig von den meisten Betriebssystemen interpretiert werden kann.

Handelt es sich bei der interpretierbaren Datei 26 beispielsweise um eine html-Datei, kann deren Inhalt mithilfe eines Webbrowsers auf dem Computer 31 angezeigt werden. Über ein vorhandenes Javascriptmodul des Browsers und der Javascript-Erweiterung der html-Datei ist es möglich, in den internen Kommunikationsspeicher 13 zu schreiben beziehungsweise von diesem zu lesen. Hierzu sind in der Javascript-Erweiterung die entsprechenden Informationen vorhanden.

So ist es möglich, dass der Benutzer eines Computers 31 im Webbrowser auf der Webseite, die durch die interpretierbare Datei 26 definiert wird, eine Funktion aufruft, die dafür sorgt, dass ein bestimmter Befehl in den Kommunikationsspeicher 13 geschrieben wird. Der Kommunikationsspeicher 13 wird beispielsweise zyklisch durch die Steuer- und Auswerteeinrichtung 5 ausgewertet.

Liest die Steuer- und Auswerteeinrichtung 5 in dem Kommunikationsspeicher 13 beispielsweise den Befehl, das Geschwindigkeitsprofil der letzten Fahrradtour auszugeben, so liest die Steuer- und Auswerteeinrichtung 5 dann die entsprechenden Daten aus dem internen Datenspeicher 11 aus. Sie bereitet die Daten in einer vorgebbaren Form auf und schreibt sie in den Kommunikationsspeicher 13. Von diesem werden die Daten z. B. über eine Refresh-Anweisung des Browsers mittels des Javascripts wiederum ausgelesen und im Webbrowser des Computers 31 angezeigt.

In ähnlicher Weise ist es auch möglich, Konfigurationsbefehle an den Fahrradcomputer 1 über den Webbrowser zu übertragen. Hierzu wird ein entsprechender Befehl über das Javascript in den Kommunikationsspeicher 13 geschrieben. Die Steuer- und Auswerteeinrichtung 5 wertet diesen Befehl dann aus und speichert die neue Konfiguration in dem internen Datenspeicher 11 ab.

Durch diesen Aufbau ist es nicht mehr erforderlich, auf einem Computer 31 spezielle Auswertungssoftware vorzusehen, um mit dem erfindungsgemäßen Fahrradcomputer 1 zu kommunizieren, sondern die notwendigen Informationen sind auf dem Fahrradcomputer 1 vorhanden und werden dem Computer 31 in einfacher Art und Weise zur Verfügung gestellt. Hierzu werden standardmäßig auf Computern 31 vorhandene Protokolle und Dateitypen verwendet, so dass auch darauf verzichtet werden kann, zusätzliche Software nachinstallieren zu müssen.

Mit dem erfindungsgemäßen Fahrradcomputer ist es somit möglich, einfach auf die Daten des Fahrradcomputers über einen Computer zuzugreifen, ohne zusätzliche Software vorsehen zu müssen.

## Patentansprüche

1. Fahrradcomputer (1) zur Ermittlung von Daten bei der Verwendung eines Fahrrades mit
- einer Schnittstelle zu mindestens einem Sensor (2), welcher Daten zur Verwendung des Fahrrades ermittelt,
- einer Steuer- und Auswerteeinrichtung (5) zum Verarbeiten und zum Speichern zumindest eines Teils der über die Schnittstelle erhaltenen Daten,
- einer Computerschnittstelle (21) zur Kommunikation mit einem Computer (31), welche als standardkonforme Schnittstelle ausgeführt ist, und
- wobei ein öffentlicher Massenspeicher (12) vorgesehen ist, auf den über die standardkonforme Schnittstelle (21) mittels eines Standard-Massenspeicherprotokolls zugreifbar ist,
**dadurch gekennzeichnet,**
- **dass** ein interner Datenspeicher (11) vorgesehen ist,
- **dass** die Steuer- und Auswerteeinrichtung (5) zum Speichern des zumindest einen Teils der über die Schnittstelle erhaltenen Daten im internen Datenspeicher (11) ausgebildet ist,
- **dass** in dem öffentlichen Massenspeicher (12) eine von einem über die standardkonforme Schnittstelle (21) angeschlossenen Computer (31) interpretierbare Datei (26) vorgesehen ist,
- **dass** ein Kommunikationsspeicher (13) vorgesehen ist,
- **dass** mittels der interpretierbaren Datei (26) der Kommunikationsspeicher (13) beschreib- und lesbar ist, und
- **dass** mittels in den Kommunikationsspeicher (13) geschriebener Daten die Steuer- und Auswerteeinrichtung (5) veranlassbar ist, Daten aus dem internen Datenspeicher (11) in den Kommunikationsspeicher (13) zu schreiben.

2. Fahrradcomputer nach Anspruch 1,
**dadurch gekennzeichnet ,**
- **dass** die standardkonforme Schnittstelle (21) als USB-Schnittstelle ausgebildet ist, und
- **dass** als Standard-Massenspeicherprotokoll ein USB-Massenspeicherprotokoll verwendbar ist.

3. Fahrradcomputer nach Anspruch 1 oder 2,
**dadurch gekennzeichnet ,**
**dass** als interpretierbare Datei (26) eine html-Datei mit Javascript vorgesehen ist.

4. Fahrradcomputer nach einem der Ansprüche 1 bis 3,
**dadurch gekennzeichnet ,**
**dass** eine Autostartfunktion für die interpretierbare Datei (26) beim Anschluss des Fahrradcomputers (1) über die standardkonforme Schnittstelle (21) an einen Computer (31) vorgesehen ist.

5. Fahrradcomputer nach einem der Ansprüche 1 bis 4,
**dadurch gekennzeichnet ,**
**dass** der öffentliche Massenspeicher (12), der interne Datenspeicher (11) und/oder der Kommunikationsspeicher (13) in demselben physikalischen Speicher (24) vorgesehen sind, und
**dass** die Speicher (24) jeweils durch Zugriffs-, Lese- und/oder Schreibrechte definiert sind.

6. Fahrradcomputer nach einem der Ansprüche 1 bis 5,
**dadurch gekennzeichnet ,**
**dass** mittels der interpretierbaren Datei (26) eine Konfiguration des Fahrradcomputers (1) ermöglicht ist, wobei mittels der interpretierbaren Datei (26) Konfigurationsdaten in den Kommunikationsspeicher (13) zur Auswertung und/oder Bearbeitung durch die Steuer- und Auswerteeinrichtung (5) schreibbar sind.

7. Fahrradcomputer nach einem der Ansprüche 1 bis 6,
**dadurch gekennzeichnet ,**
**dass** ein zyklisches Auslesen des Kommunikationsspeichers (13) durch die Steuer- und Auswerteeinrichtung (5) vorgesehen ist.

8. Fahrradcomputer nach einem der Ansprüche 1 bis 7,
**dadurch gekennzeichnet ,**
**dass** ein Auslesebefehl zum Auslesen des Kommunikationsspeichers (13) an die Steuer- und Auswerteeinrichtung (5) vorgesehen ist.

9. Fahrradcomputer nach einem der Ansprüche 1 bis 8,
**dadurch gekennzeichnet ,**
**dass** eine zusätzliche HMI-Schnittstelle über die standardkonforme Schnittstelle vorgesehen ist, welche mittels einer speziellen Software zum direkten Zugriff auf den internen Datenspeicher (11) ausgelegt ist.

10. Fahrradcomputer nach einem der Ansprüche 1 bis 9,
**dadurch gekennzeichnet ,**
**dass** mittels der interpretierbaren Datei (26) Daten des internen Datenspeichers (11) in roher und/oder aufbereiteter Form an Dienste im Internet übertragbar sind.

## Claims

1. Bicycle computer (1) to detect data during use of a bicycle, having:
- an interface to at least one sensor (2) which detects data for use of the bicycle,
- a control and evaluation unit (5) to process and store the data or a part thereof received via the interface,
- a computer interface (21) for communication with a computer (31) which is designed as a standards-compliant interface, and
- wherein a public mass storage (12) is provided which can be accessed via the standards-compliant interface (21) by means of a standard mass storage protocol,
**characterised in that**
- an internal data memory (11) is provided,
- the control and evaluation unit (5) is designed to store the data or the part thereof received via the interface in the internal data memory (11),
- a data file (26) which can be interpreted by a computer (31) connected via the standards-compliant interface (21) is provided in the public mass storage (12),
- a communication memory (13) is provided,
- it is possible to read and write to the communication memory (13) by means of the interpretable data file (26), and
- by using data written to the communication memory (13) the control and evaluation unit (5) can be triggered to write data from the internal data memory (11) to the communication memory (13).

2. Bicycle computer according to claim 1,
**characterised in that**
- the standards-compliant interface (21) is designed as a USB interface, and
- a USB mass storage protocol can be used as a standard mass storage protocol.

3. Bicycle computer according to claim 1 or 2,
**characterised in that**
an html data file with Javascript is provided as an interpretable data file (26).

4. Bicycle computer according to one of claims 1 to 3,
**characterised in that**
an auto-start function is provided for the interpretable data file (26) upon connection of the bicycle computer (1) via the standards-compliant interface (21) to a computer (31).

5. Bicycle computer according to one of claims 1 to 4,
**characterised in that**
the public mass storage (12), the internal data memory (11) and / or the communication memory (13) are provided in the same physical memory (24), and the memories (24) are each defined by access, read and / or write rights.

6. Bicycle computer according to one of claims 1 to 5,
**characterised in that**
a configuration of the bicycle computer (1) is facilitated by means of the interpretable data file (26), wherein by means of the interpretable data file (26) configuration data can be written to the communication memory (13) for evaluation and / or processing by the control and evaluation unit (5).

7. Bicycle computer according to one of claims 1 to 6,
**characterised in that**
a cyclical reading of the communication memory (13) is provided by the control and evaluation unit (5).

8. Bicycle computer according to one of claims 1 to 7,
**characterised in that**
a read command to read the communication memory (13) is provided to the control and evaluation unit (5).

9. Bicycle computer according to one of claims 1 to 8,
**characterised in that**
an additional HMI interface is provided via the standards-compliant interface, which is designed by means of special software for direct access to the internal data memory (11).

10. Bicycle computer according to one of claims 1 to 9,
**characterised in that**
data of the internal data memory (11) can be transmitted by means of the interpretable data file (26) in unprocessed and / or processed form to internet services.

## Revendications

1. Un ordinateur pour vélo (1) pour la détermination de données dans le cadre de l'utilisation d'un vélo avec
- une interface par rapport à au moins un capteur (2), lequel détermine des données pour l'utilisation du vélo,
- un dispositif de contrôle et d'exploitation (5) pour le traitement et pour l'enregistrement d'une moins une partie des données reçues par le biais de l'interface,
- une interface d'ordinateur (21) pour la communication avec un ordinateur (31), laquelle est exécutée en tant qu'interface conforme aux normes, et
- tandis qu'est prévue une mémoire de masse publique (12) accessible via l'interface conforme aux normes (21) par le biais d'un protocole de mémoire de masse standard,
**caractérisé en ce que**
- une mémoire de données interne (11) est prévue,
- le dispositif de contrôle et d'exploitation (5) est formé pour l'enregistrement de la au moins une partie des données reçues par le biais de l'interface dans la mémoire de données interne (11),
- dans la mémoire de masse publique (12), un fichier interprétable (26) d'un ordinateur (31) raccordé par le biais de l'interface conforme aux normes (21) est prévu,
- une mémoire de communication (13) est prévue,
- par le biais d'un fichier interprétable (26), la mémoire de communication (13) peut être inscriptible et lue, et
- par le biais de données écrites dans la mémoire de communication (13), le dispositif de contrôle et d'exploitation (5) peut être mis en mesure d'écrire des données à partir de la mémoire de données (11) dans la mémoire de communication (13).

2. L'ordinateur pour vélo selon la revendication 1
**caractérisé en ce que**
- l'interface conforme aux normes (21) est formée en tant qu'interface USB et
- un protocole de mémoire de masse USB est utilisable en tant que protocole de mémoire de masse standard.

3. L'ordinateur de vélo selon la revendication 1 ou 2
**caractérisé en ce que**
un fichier html avec Javascript est prévu en tant que fichier interprétable (26).

4. L'ordinateur de vélo selon une des revendications 1 à 3
**caractérisé en ce que**
une fonction démarrage automatique pour le fichier interprétable (26) est prévue lors du raccordement de l'ordinateur pour vélo (1) par le biais de l'interface conforme aux normes (21) à un ordinateur (31).

5. L'ordinateur de vélo selon une des revendications 1 à 4
**caractérisé en ce que**
la mémoire de masse publique (12), la mémoire de données interne (11) et/ou la mémoire de communication (13) sont prévues dans la même mémoire physique (24) et
les mémoires (24) sont chacune définies par le biais de droits d'accès, de lecture et/ou d'écriture.

6. L'ordinateur pour vélo selon une des revendications 1 à 5
**caractérisé en ce que**
par le biais du fichier interprétable (26), une configuration de l'ordinateur pour vélo (1) est possible, tandis que, par le biais du fichier interprétable (26), des données de configuration dans la mémoire de communication (13) sont inscriptible pour l'exploitation et/ou le traitement par le biais du dispositif de contrôle et d'exploitation (5).

7. L'ordinateur pour vélo selon une des revendications 1 à 6
**caractérisé en ce que**
une lecture cyclique de la mémoire de communication (13) est prévue par le biais du dispositif de contrôle et d'exploitation (5).

8. L'ordinateur de vélo selon une des revendications 1 à 7
**caractérisé en ce que**
une commande de lecture pour la lecture de la mémoire de communication (13) destiné au dispositif de contrôle et d'exploitation (5) est prévue.

9. L'ordinateur de vélo selon une des revendications 1 à 8
**caractérisé en ce qu'**
une interface homme-machine (IHM) supplémentaire est prévue par le biais de l'interface conforme aux normes, qui est adaptée, par le biais d'un logiciel spécial, pour l'accès direct à la mémoire de données interne (11).

10. L'ordinateur de vélo selon une des revendications 1 à 9
**caractérisé en ce que**
par le biais du fichier interprétable (26), des données de la mémoire de données interne (11) sont transférables sous forme brute et/ou traitée à des services sur Internet.
